# EUROPEAN PATENT APPLICATION

(11) **EP 4 697 559 A2**
(43) Date of publication of application: **18.02.2026**
(21) Application number: 25193232.3
(22) Date of filing: 31.07.2025
(51) Int. Cl.: H02J 13/10, G01D 7/02, G05B 23/02, H02J 3/38, H02J 101/10

(54) **MANAGEMENT SYSTEM, POWER UNIT, AND POWER SYSTEM**

(30) Priority: 01.08.2024 JP 2024126187
(71) Applicant: Yanmar Holdings Co., Ltd., Osaka-shi, Osaka (JP)
(72) Inventor: AZUMA, Naoki, Osaka (JP); KAWAI, Susumu, Osaka (JP)
(74) Representative: Sekiguchi, Kazuya

(57) **Abstract**

[Problem] To improve the visibility of a measurement value display of a measurement target.

[Solution] The management system 300 includes a display portion 1031 and a display control portion 1042. The display portion 1031 displays a measurement value display 11 indicating a measurement value of a measurement target of the power unit 100. The display control portion 1042 controls the display portion 1031. The measurement value display 11 includes a meter display 112 of the measurement value and a numerical value display 113 of the measurement value. The meter display 112 is arranged in a meter region 1120 having either an arc shape or a circumferential shape. The numerical value display 113 is arranged in a numerical value region 1130 arranged inside the meter region 1120.

## Description

### TECHNICAL FIELD

The present invention relates to a management system, a power unit, and a power system.

### BACKGROUND ART

In a conventional power system including a power generator, a drive machine, and the like, various states of the system itself are displayed on a screen and can be managed. For example, a plurality of display marks are displayed on a display device of a work machine of Patent Document 1. The measurement values of a plurality of measurement targets (for example, the voltage of the battery) are meter-displayed by the respective display marks. By the operation of displaying the actual numerical value display mark of the desired measurement target, the numerical value display mark is displayed at the display location of another measurement target.

### PRIOR ART DOCUMENT

### PATENT DOCUMENT

Patent Document 1: Japanese Unexamined Patent Publication No. 2002-121776

### SUMMARY OF INVENTION

### TECHNICAL PROBLEM

However, when the number of measurement targets increases, the number of displays to be arranged on the display screen also increases. Therefore, it is likely to be difficult to visually recognize each display.

The present invention has been made in view of the above-described circumstances, and an object of the present invention is to improve the visibility of a measurement value display of a measurement target.

### SOLUTION TO PROBLEM

In order to achieve the above-described object, a management system according to an aspect of the present invention includes a display portion and a display control portion. The display portion displays a measurement value display indicating a measurement value of a measurement target of a power unit. The display control portion controls the display portion. The measurement value display includes a meter display of the measurement value and a numerical value display of the measurement value. The meter display is arranged in a meter region having either an arc shape or a circumferential shape. The numerical value display is arranged in a numerical value region arranged inside the meter region.

In order to achieve the above-described object, a power unit according to an aspect of the present invention includes the above-described management system.

In order to achieve the above-described object, a power system according to an aspect of the present invention includes the above-described power unit and an external control device. The external control device is arranged outside the power unit and is capable of controlling the power unit.

Additional features and advantages of the present invention will become more apparent from the following embodiment.

### ADVANTAGEOUS EFFECTS OF INVENTION

According to the present invention, the visibility of the measurement value display of the measurement target can be improved.

### BRIEF DESCRIPTION OF DRAWINGS

FIG. 1 is a block diagram illustrating an example configuration of a power system.
FIG. 2 is a schematic overview of the power system.
FIG. 3 is a diagram illustrating a display example of a main management screen.
FIG. 4 is a diagram illustrating a display example of a temperature management screen.
FIG. 5 is a diagram illustrating a display example of a warning list screen.

### DESCRIPTION OF EMBODIMENTS

### <1. Embodiment>

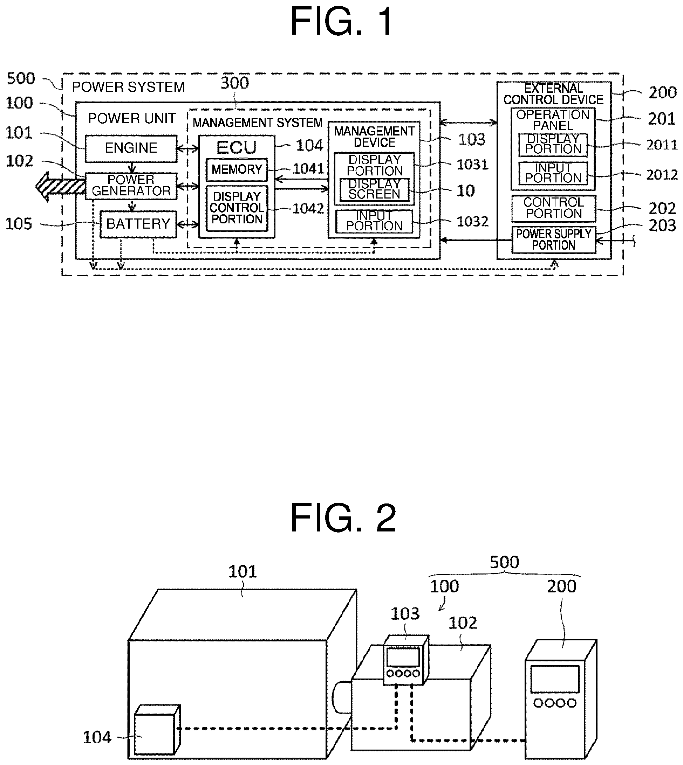

FIG. 1 is a block diagram illustrating a configuration example of a power system 500. FIG. 2 is a schematic overview of the power system 500. The power system 500 of the present embodiment is a power generation system that uses a combustible fluid as a fuel, is installed indoors or outdoors, and supplies electric power to external devices and facilities that require electric power. The power system 500 includes a power unit 100 and an external control device 200.

### <1-1. Power Unit 100>

Next, a configuration example of the power unit 100 will be described with reference to FIGS. 1 and 2. The power unit 100 of the power system 500 includes an engine 101, a power generator 102, an electronic control unit (ECU) 104, a management device 103, and a battery 105.

The engine 101 is a diesel engine in the present embodiment, and drives the power generator 102. The engine 101 operates using, as fuel, a mixed fluid of a combustible fluid and air supplied from a turbocharger (not illustrated). The combustible fluid is any one of light oil, city gas, propane gas, and the like. For example, the engine 101 supplies the above-described mixed fluid to a diesel engine (not illustrated), and transmits the output to the power generator 102.

The power generator 102 is driven by the output transmitted from the engine 101 to generate electric power, and supplies the electric power to the outside of the power system 500. A part of the electric power output from the power generator 102 can be supplied to the battery 105 and the external control device 200.

The management device 103 is placed near the engine 101 and the power generator 102, displays a state of the power unit 100, and outputs a signal indicating an operation input to the ECU 104. The management device 103 constitutes, together with the ECU 104, a management system 300 that displays a measurement value of the power unit 100. That is, the power unit 100 of the power system 500 includes the management system 300. The management device 103 relays communication between the external control device 200 and the ECU.

The management device 103 includes a display portion 1031 and an input portion 1032. The display portion 1031 displays measurement results of various measurement targets of the power unit 100 on a display screen 10. In the present embodiment, the display portion 1031 is a touch panel and has an operation input function. The display portion 1031 receives touch inputs of icons for various operation inputs displayed on the display screen 10 by the operation input function, and outputs the operation contents of the touch inputs to the ECU 104. The input portion 1032 is a physical input device that receives an operation input from a worker or the like, and outputs an input signal indicating the content of the received operation input to the ECU 104. The input portion 1032 is not limited to the example of the present embodiment and may be omitted. For example, the operation input may be performed only by the operation input function of the display portion 1031.

The ECU 104 controls each component of the power unit 100 that needs to be controlled, by using programs, date, and the like stored in a memory 1041. The ECU 104 controls the above-described components of the power unit 100 on the basis of signals outputted from the external control device 200 and the management device 103.

The ECU 104 includes the memory 1041 and a display control portion 1042. The memory 1041 is a non-transitory storage medium that maintains memory even when electric power is not supplied. The display control portion 1042 controls the display portion 1031.

The battery 105 is, for example, a chargeable and dischargeable secondary battery such as a lead-acid battery, a lithium ion battery, or a sodium-sulfur (NAS) battery. The battery 105 is supplied with electric power from a commercial power network via the external control device 200 in a normal time, and maintains a fully charged state or an amount of charge close to the fully charged state (for example, a power storage rate of 80%). When the power unit 100 is in operation, the battery 105 may be supplied with part of the electric power output from the power generator 102 to maintain a predetermined power storage amount. On the other hand, when a power failure (that is, a stop of the supply of electric power from the commercial power supply network) occurs, the battery 105 supplies electric power to a component of the power unit 100 that requires the electric power. During a power failure, the battery 105 may further supply electric power to the external control device 200.

### <1-2. External Control Device 200>

The external control device 200 is arranged outside the power unit 100 and can communicate with the management device 103. Thus, the external control device 200 can control the power unit 100 by cooperating with the ECU 104 via the management device 103. However, the present invention is not limited to this example, and the external control device 200 may be able to directly communicate with the ECU 104.

The external control device 200 includes an operation panel 201, a control portion 202, and a power supply portion 203.

The operation panel 201 includes a display portion 2011 and an input portion 2012. The display portion 2011 displays measurement results of various measurement targets of the power unit 100, an alarm (notification of an abnormal state), and the like. The input portion 2012 receives an operation input of a worker or the like and outputs the operation input to the control portion 202.

The control portion 202 controls each component that needs to be controlled in the external control device 200. The control portion 202 transmits a control signal to the ECU 104 and controls each component that needs to be controlled in the power unit 100.

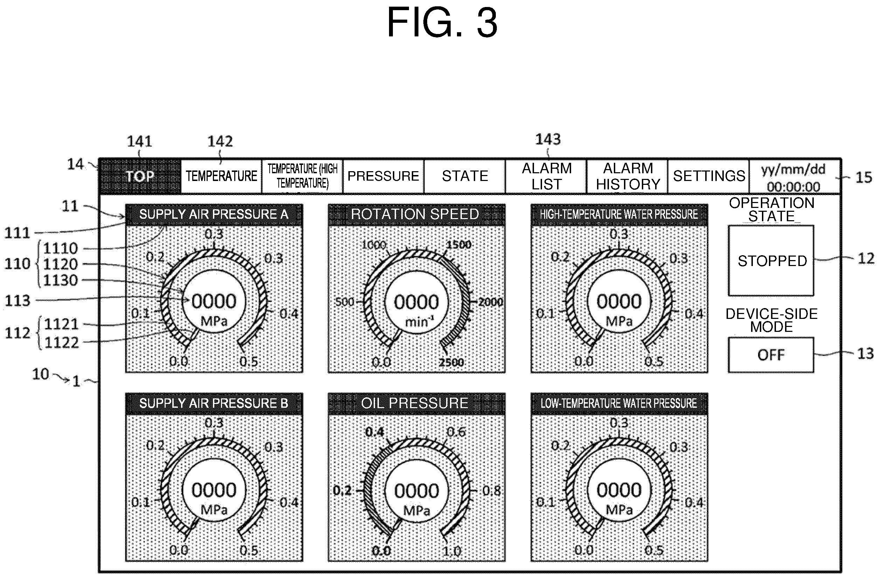

As for the operation input for controlling the power unit 100, the operation input in the external control device 200 is prioritized over the operation input in the management device 103. In the present embodiment, the input portion 2012 includes an operation input switching portion. The switching portion selectively enables either an operation input in the management device 103 or an operation input in the external control device 200. A similar switching portion may also be provided in the management device 103 on the power unit 100 side (see, for example, a device-side mode display 13 in FIG. 3 described below). In this case, when which of the operation input in the management device 103 and the operation input in the external control device 200 is to be enabled is selected in one switching portion, the same selection is set in the other switching portion. However, this example does not exclude a configuration in which the switching portion is not provided in the management device 103.

The power supply portion 203 receives supply of electric power from a commercial power supply network in a normal time, and supplies the electric power to the components of the power unit 100 and the external control device 200 that require electric power. When a power failure (that is, a stop of the supply of electric power from the commercial power supply network) occurs, the power supply portion 203 may receive the supply of electric power from the battery 105 (and/or the power generator 102) of the power unit 100.

The external control device 200 may include a notification portion such as a speaker. The notification portion notifies the surroundings of the operation state of the power unit 100 and the like.

### <1-3. Display Screen 10 in Management Device 103>

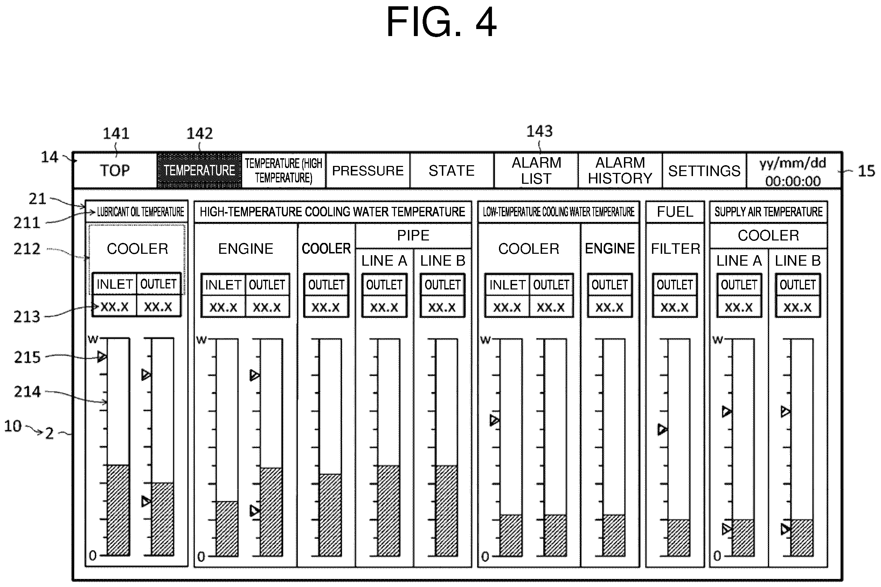

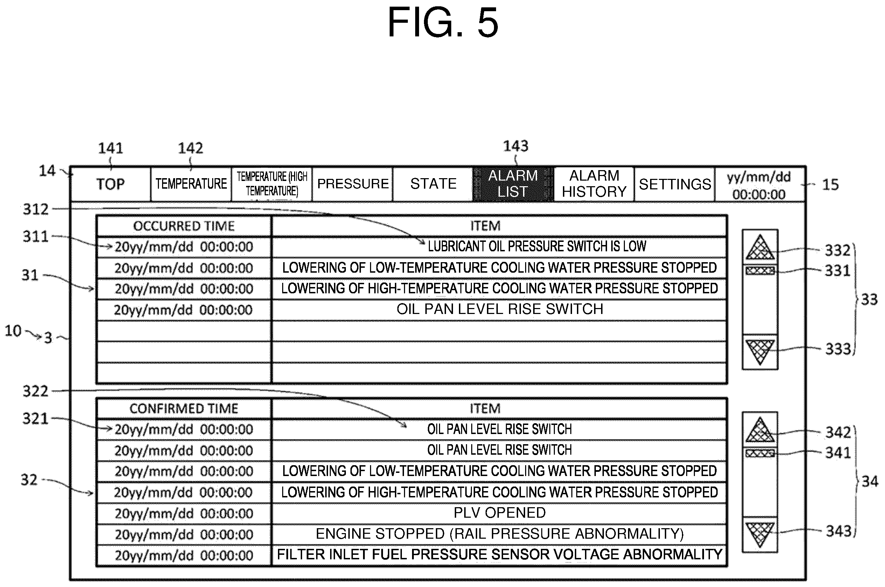

Next, the display screen 10 of the display portion 1031 in the management device 103 will be described with reference to FIGS. 3 to 5. FIG. 3 is a diagram illustrating a display example of the main management screen 1. FIG. 4 is a diagram illustrating a display example of the temperature management screen 2. FIG. 5 is a diagram illustrating a display example of the warning list screen 3.

As illustrated in FIGS. 3 to 5, the display portion 1031 can switch between a plurality of display screens 10. In the present embodiment, the plurality of display screens 10 includes a main management screen 1 illustrated in FIG. 3, a temperature management screen 2, and a warning list screen 3. The plurality of display screens 10 also includes a high temperature management screen, a pressure management screen, a state management screen, a warning history list screen, and a setting change screen. The plurality of display screens 10 is only required to include at least the main management screen 1 and is not limited to the above-described example. That is, the plurality of display screens 10 may include a screen other than the above-described screens, or may not include at least any one of the above-described screens other than the main management screen 1.

### <1-3-1. Main Management Screen 1>

The main management screen 1 will be described with reference to FIG. 3. The main management screen 1 is a main screen of the display portion 1031. A plurality of measurement value displays 11, an operation state display 12, a device-side mode display 13, a plurality of tabs 14, and a date and time display 15 are arranged in the main management screen 1.

### <1-3-1-1. Measurement Value Display 11>

On the main management screen 1, the display portion 1031 displays a measurement value display 11. The measurement value display 11 indicates a measurement value of a measurement target of the power unit 100, and displays a measurement value of a measurement target having a high degree of importance in the present embodiment. Each of the measurement value displays 11 is displayed in the corresponding display region 110 and is regularly displayed on the main management screen 1. The number of the measurement value displays 11 is six in FIG. 3, but is not limited to this example, and may be one or a plurality other than six. The arrangement of the respective measurement value displays 11 is not particularly limited. For example, the arrangement of the plurality of measurement value displays 11 is a two dimensional arrangement of three columns and two rows in FIG. 3, but may be a two dimensional arrangement having a different number of rows and/or columns, or may not be a two dimensional arrangement.

The measurement value display 11 includes an item display 111, a meter display 112, and a numerical value display 113.

The item display 111 is arranged in the item display region 1110 and displays the name of the measurement target. The item display region 1110 occupies the upper portion of the display region 110 of the item display 111 in the drawing of FIG. 3.

The meter display 112 is arranged in the meter region 1120 and indicates a measurement value of the measurement target displayed in the item display 111. The meter region 1120 is arranged below the item display region 1110 in the display region 110 in the drawing of FIG. 3. The meter display 112 includes an axis display 1121 and a needle display 1122. The meter region 1120 and the axis display 1121 have an arc shape in FIG. 3, but are not limited to this example, and may have a circumferential shape.

The axis display 1121 extends along the circumference of the meter region 1120. The needle display 1122 moves by a distance corresponding to the measurement value along the axis display 1121 in the circumferential direction about the center point of the axis display 1121 having an arc shape or a circumferential shape. That is, the needle display 1122 moves from a reference position (for example, the position of the origin at which the measurement value = 0) of the axis display 1121 to a circumferential position of a distance corresponding to the measurement value.

The numerical value display 113 is arranged in the numerical value region 1130 and displays (the numerical value of) the measurement value and the unit thereof of the measurement target displayed in the item display 111. The numerical value region 1130 is arranged inside the meter region 1120 in the display region 110. The numerical value region 1130 has a circular shape in FIG. 3, but is not limited to this example, and may have a fan shape. Alternatively, the numerical value region 1130 may have an elliptical shape or an n-polygonal shape (n is an integer of 1 or more).

According to the management system 300, the numerical value display 113 is arranged inside the meter display 112 having an arc shape or a circumferential shape. Therefore, for example, as compared with a configuration in which the numerical value display 113 is arranged outside the meter display 112, the numerical value display 113 is displayed larger in each of the measurement value displays 11. Therefore, the visibility of the display of the measurement target (particularly, the measurement value thereof) can be improved.

Preferably, each measurement value display 11 is displayed in a separate region, that is, does not overlap. Thus, at least a part of the measurement value display 11 is not hidden by another measurement value display 11. Thus, the entirety of each measurement value display is displayed. Therefore, even when a plurality of measurement value displays is displayed on the same display screen 10, each measurement value display can be reliably visually recognized.

In the measurement value display 11, at least a part of the needle display 1122 is arranged between the meter region 1120 and the numerical value region 1130. Specifically, the needle display 1122 is arranged outside the numerical value region 1130 between the meter region 1120 and the numerical value region 1130. The needle display 1122 extends radially outward with respect to the center point of the axis display 1121 toward the meter region 1120. The tip end portion (radially outer end portion) of the needle display 1122 preferably reaches the inner peripheral end (radially inner end) of the meter region 1120, and more preferably is located radially outward of the inner peripheral end of the meter region 1120. The distal end portion of the needle display 1122 may be located radially outward of the outer peripheral end (radially outer end) of the axis display 1121. Thus, the position on the axis display 1121 indicated by the needle display 1122 can be reliably visually recognized. However, the above-described example does not exclude a configuration in which the tip end portion of the needle display 1122 does not reach the inner peripheral end (radially inner end) of the meter region 1120 in at least one measurement value display 11.

In the measurement value display 11, the background color of the numerical value region 1130 is preferably different from the background color of a region outside the numerical value region 1130. Thus, the numerical value region 1130 is easily distinguished from another region. Therefore, the numerical value display 113 displayed in the numerical value region 1130 is more easily visually recognized. However, this example does not exclude a configuration in which the background color of at least a part of the region outside the numerical value region 1130 is the same as or similar to the background color of the numerical value region 1130.

### <1-3-1-2. Operation State Display 12>

On the main management screen 1, the display portion 1031 displays the operation state display 12 together with the measurement value display 11. The operation state display 12 indicates an operation state of the power unit 100. For example, the operation state display 12 includes "stopped", "start not established", "start preparation completed", "starting", "start failure", "emergency stop", "during operation", and the like.

"Stopped" indicates a state in which the operation of the power unit 100 is stopped. The "start not established" indicates a state in which the engine 101 cannot be started. The "start preparation completed" indicates that the preparation for starting the engine 101 has been completed. "Starting" indicates a state in which the start of the engine 101 has succeeded and the power unit 100 can operate. The "start failure" indicates a state in which the start of the engine 101 fails and the power unit 100 cannot operate. The "emergency stop" indicates that the power unit 100 has been urgently stopped by, for example, an emergency stop operation in the management device 103 or the external control device 200. "During operation" indicates a state in which the power unit 100 is operating in normal operation.

Preferably, the background color (e.g., gray) of the display of "stopped" and "start preparation completed", the background color (for example, red) of the display of "start not established", "start failure", and "emergency stop", and the background color (for example, green) of the display of "starting" and "during operation" are different from each other. Thus, the worker can intuitively identify the degree of stability (in other words, the degree of risk) of the operation state of the power unit 100 by viewing the operation state display 12.

### <1-3-1-3. Device-Side Mode Display 13>

On the main management screen 1, the display portion 1031 further displays a device-side mode display 13 together with the measurement value display 11. The device-side mode display 13 indicates which one of the operation input of the management device 103 and the operation input of the external control device 200 is enabled. That is, the device-side mode display 13 indicates whether the power unit 100 can be controlled by the external control device 200 arranged outside the power unit 100. In other words, the device-side mode display 13 indicates whether the power unit 100 can be controlled based on an operation input in the management device 103 on the power unit 100 side. In the present embodiment, the device-side mode display 13 displays either "ON" or "OFF".

"ON" indicates that the operation input of the management device 103 is enabled and the operation input of the external control device 200 is disabled. That is, the power unit 100 can be controlled by an operation input in the management device 103.

"OFF" indicates that the operation input of the management device 103 is disabled and the operation input of the external control device 200 is enabled. That is, the power unit 100 can be controlled by an operation input in the external control device 200.

The device-side mode display 13 enables the worker to identify which control of the management device 103 and the external control device 200 is enabled.

The "ON" and "OFF" of the device-side mode display 13 may be switchable by both the management device 103 and the external control device 200, or may be switchable by only one of the management device 103 and the external control device 200. For example, the switching between "ON" and "OFF" may be able to be performed by an operation input on the input portion 1032 of the management device 103, a touch operation on the device-side mode display 13, or the like.

### <1-3-1-4. Tab 14>

The display portion 1031 further displays a plurality of tabs 14 on the display screen 10. The plurality of tabs 14 are arranged on each of the display screens 10, and in the present embodiment, as illustrated in FIGS. 3 to 5, the plurality of tabs 14 are arranged in the left-right direction of the drawing in the upper portion of the display screen 10. However, the arrangement of the plurality of tabs 14 is not limited to the example illustrated in FIGS. 3 to 5.

Each tab 14 is a switching display that can be touch-operated to switch the display screen 10, and is individually associated with a different display screen 10. That is, when any one of the tabs 14 is selected by a touch operation, the display control portion 1042 switches and displays the display screen 10 corresponding to the tab 14 on the display portion 1031. The background color of the tab corresponding to each of the switched and displayed screens is different from the background color of the other tabs 14.

For example, in the present embodiment, the plurality of tabs 14 include a TOP tab 141, a temperature tab 142, a temperature (high temperature) tab, a pressure tab, a state tab, an alarm list tab 143, an alarm history tab, and a settings tab.

The TOP tab 141 is associated with the main management screen 1. When the TOP tab 141 is touch-operated, the display screen 10 is switched to the main management screen 1, and the background color of the TOP tab 141 is changed.

The temperature tab 142 is associated with the temperature management screen 2. When the temperature tab 142 is touch-operated, the display screen 10 is switched to the temperature management screen 2, and the background color of the temperature tab 142 is changed (see FIG. 4).

The alarm list tab 143 is associated with the warning list screen 3. When the alarm list tab 143 is touch-operated, the display screen 10 is switched to the warning list screen 3, and the background color of the alarm list tab 143 is changed (see FIG. 5).

The temperature (high temperature) tab is associated with the high temperature management screen. The pressure tab is associated with the pressure management screen. The state tab is associated with the state management screen. The alarm history tab is associated with the warning history list screen. The settings tab is associated with the setting change screen.

### <1-3-1-5. Date And Time Display 15>

The display portion 1031 further displays a date and time display 15 on the display screen 10. The date and time display 15 displays the current date and time. The date and time display 15 is displayed on all the display screens 10, and in the present embodiment, as illustrated in FIGS. 3 to 5, the date and time display 15 is arranged on the upper right portion of the display screen 10 and with the plurality of tabs 14. However, the arrangement of the date and time display 15 is not limited to the examples illustrated in FIGS. 3 to 5.

### <1-3-2. Temperature Management Screen 2>

Next, the temperature management screen 2 will be described with reference to FIG. 4. On the temperature management screen 2, a plurality of measurement value displays 21 are arranged in addition to the plurality of tabs 14 and the date and time display 15. That is, the display portion 1031 displays the measurement value display 21 on the temperature management screen 2.

In the present embodiment, the respective measurement value displays 21 indicate the current temperatures of the respective measurement targets in the diesel engine of the engine 101. The measurement targets in FIG. 4 are the "lubricating oil temperature", the "high-temperature cooling water temperature", the "low-temperature cooling water temperature", the "(temperature in the flow passage of) fuel", and the "supply air temperature".

The plurality of measurement value displays 21 are arranged side by side in the left-right direction of the drawing on the temperature management screen 2. The arrangement of the plurality of measurement value displays 21 is not limited to the example illustrated in FIG. 4. The number of the measurement value displays 21 is five in FIG. 4, but is not limited to this example, and may be one or a plurality other than five.

Each of the measurement value displays 21 has an item display 211, a detail display 212, a numerical value display 213, a bar display 214, and a threshold value display 215.

The item display 211 indicates the name of the measurement target. The detail display 212 indicates simple information for specifying the measurement target. The numerical value display 213 indicates the temperature of the measurement target indicated in the item display 211 by a numerical value. The bar display 214 indicates the temperature of the measurement target indicated in the item display 211 by a bar graph. One or two threshold value displays 215 are arranged on the scale of the bar display 214. The threshold value display 215 indicates a threshold value of the temperature of the measurement target indicated in the item display 211. When two threshold value displays 215 are arranged, the threshold value display 215 on the upper side of the drawing indicates the upper limit value, and the threshold value display 215 on the lower side of the drawing indicates the lower limit value.

### <1-3-3. Warning List Screen 3>

Next, the warning list screen 3 will be described with reference to FIG. 5. The warning list screen 3 displays a list of measurement targets from which an abnormal measurement value has been detected. In the warning list screen 3, a list display 31, a history display 32, and operation displays 33 and 34 are arranged in addition to the plurality of tabs 14 and the date and time display 15.

That is, the display portion 1031 displays these on the warning list screen 3.

The list display 31 displays, in time series, a list of at least some of the matters related to the measurement target for which an abnormal measurement value has been detected at the current time point. The list display 31 includes a date display 311 and a warning content display 312. The date display 311 indicates the date and time when the abnormal measurement value that is continuously detected at the current time point was generated. The warning content display 312 is arranged on the right side of the date display 311 in the drawing in FIG. 5, and indicates the details of the measurement target for which the date display 311 indicates the date and time of occurrence.

The history display 32 displays, in time series, a list of at least some of the matters related to the measurement target for which an abnormal measurement value has been detected up to the current time point. The history display 32 includes a matter related to a measurement target for which an abnormal measurement value has been eliminated at the current time point. The history display 32 includes a date display 321 and a warning content display 322. The date display 321 indicates the date and time when the abnormal measurement value detected up to the current time point was measured for the first time. The warning content display 312 is arranged on the right side of the date display 321 in the drawing in FIG. 5, and indicates the details of the measurement target for which the date display 321 indicates the date and time of occurrence.

The operation display 33 is an icon that can be touch-operated to change a matter displayed in the list display 31. The operation display 33 includes a position display 331, a scroll up display 332, and a scroll down display 333. The position display 331 indicates a time-series position of a matter displayed in the list display 31 with respect to a matter that can be displayed in the list display 31. The position display 331 can be slid in the up-down direction in the drawing in FIG. 5 by a touch operation. Thus, the matters displayed in the list display 31 can be changed. The scroll up display 332 is an icon that can be touch-operated to display a matter having a newer generation date and time in the list display 31. The scroll down display 333 is an icon that can be touch-operated to display a matter having an older generation date and time in the list display 31.

The operation display 34 is an icon that can be touch-operated to change a matter displayed in the history display 32. The operation display 34 includes a position display 341, a scroll up display 342, and a scroll down display 343. The position display 341 indicates a time-series position of a matter displayed in the history display 32 with respect to a matter that can be displayed in the history display 32. The position display 341 can be slid in the up-down direction in the drawing in FIG. 5 by a touch operation. Thus, the matters displayed in the history display 32 can be changed. The scroll up display 342 is an icon that can be touch-operated to display a matter having a newer generation date and time in the history display 32. The scroll down display 343 is an icon that can be touch-operated to display a matter having an older generation date and time in the history display 32.

Preferably, when an abnormal measurement value is newly detected in any of the measurement targets, the display control portion 1042 displays the warning list screen 3 on the display portion 1031. Thus, the worker can immediately recognize the occurrence of the abnormality of the measurement target, and can quickly eliminate the abnormality of the measurement target.

### <2. Remarks>

The embodiment of the present invention has been described above. It should be understood by those skilled in the art that the above-described embodiment is merely an example and various modifications can be made to a combination of components and processes thereof and are within the scope of the present invention.

### <3. Overview>

The above-described embodiment will be collectively described below.

For example, a management system 300 disclosed in this specification has a first configuration comprising:
a display portion 1031 that displays a measurement value display 11 indicating a measurement value of a measurement target of a power unit 100; and
a display control portion 1042 that controls the display portion 1031;
wherein the measurement value display 11 includes
   a meter display 112 of the measurement value that is arranged in a meter region 1120 having either an arc shape or a circumferential shape, and
   a numerical value display 113 of the measurement value that is arranged in a numerical value region 1130 arranged inside the meter region 1120.

The management system 300 according to the first configuration may have a configuration (second configuration), wherein
the display portion 1031 displays a plurality of the measurement value displays 11, and
each of the measurement value displays 11 is arranged in an individual region.

The management system 300 according to the first or second configuration may have a configuration (third configuration), wherein
the numerical value region 1130 has a fan shape in which an outer periphery extends along the meter region 1120, or a circular shape, and
the meter display 112 includes:
   an axis display 1121 that extends along a circumference of the meter region 1120, and
   a needle display 1122 that moves along the axis display 1121 by a distance corresponding to the measurement value, and
at least a part of the needle display 1122 is arranged between the meter region 1120 and the numerical value region 1130.

The management system 300 according to any one of the first to third configurations may have a configuration (fourth configuration), wherein
in the measurement value display 11, a background color of the numerical value region 1130 is different from a background color of a region outside the numerical value region 1130.

The management system 300 according to any one of the first to fourth configurations may have a configuration (fifth configuration), wherein
the display portion 1031 further displays an operation state of the power unit 100 together with the measurement value display 11.

The management system 300 according to the fifth configuration may have a configuration (sixth configuration), wherein
the operation state includes a state in which operation of the power unit 100 is stopped.

The management system 300 according to any one of the first to sixth configurations may have a configuration (seventh configuration), wherein
the display portion 1031 further displays, together with the measurement value display 11, a control mode display 13 indicating whether or not the power unit 100 can be controlled by an external control device 200 arranged outside the power unit 100.

The management system 300 according to any one of the first to seventh configurations may have a configuration (eighth configuration), wherein
the display portion 1031 can switch between a plurality of display screens 10,
each of the display screens 10 is provided with a plurality of switching displays 14 for switching the display screens 10,
   each of the switching displays 14 is individually associated with a different one of the display screens 10, and
when any one of the switching displays 14 is selected, the display control portion 1042 displays, on a display portion 1031, the display screen 10 corresponding to the selected switching display 14.

The management system 300 according to any one of the first to eighth configurations may have a configuration (ninth configuration), wherein
the display portion 1031 can switch between a plurality of display screens 10,
a plurality of the display screens 10 includes a list screen 3 that displays, in a list, the measurement targets for which the measurement value that is abnormal has been detected, and
when the measurement value that is abnormal is detected, the display control portion 1042 displays the list screen 3 on the display portion 1031.

The power unit 100 disclosed in this specification has a configuration (tenth configuration) including
the management system 300 according to any one of the first to ninth configurations.

A power system 500 disclosed in this specification has a configuration (eleventh configuration) comprising:
the power unit 100 according to the tenth configuration; and
an external control device 200 that is arranged outside the power unit 100 and is capable of controlling the power unit 100.

### REFERENCE SIGNS LIST

500 power system
100 power unit
101 engine
102 power generator
103 management device
1031 display portion
1032 input portion
104 ECU
1041 memory
1042 display control portion
105 battery
200 external control device
201 operation panel
2011 display portion
2012 input portion
202 control portion
203 power supply portion
300 management system
10 display screen
1 main management screen
11 measurement value display
110 display region
111 item display
1110 item display region
112 meter display
1120 meter region
1121 axis display
1122 needle display
113 numerical value display
1130 numerical value region
12 operation state display
13 device-side mode display (control mode display)
14 tab
141 management tab
142 temperature tab
143 alarm list tab
2 temperature management screen
21 measurement value display
210 display region
211 item display
212 detail display
213 numerical value display
214 bar display
215 threshold value display
3 warning list screen
31 list display
311 date and time display
312 warning content display
32 history display
321 date and time display
322 warning content display
33, 34 operation display
331, 341 position display
332, 342 scroll up display
333, 343 scroll down display

## Claims

1. A management system comprising:
a display portion that displays a measurement value display indicating a measurement value of a measurement target of a power unit; and
a display control portion that controls the display portion;
wherein the measurement value display includes
a meter display of the measurement value that is arranged in a meter region having either an arc shape or a circumferential shape, and
a numerical value display of the measurement value that is arranged in a numerical value region arranged inside the meter region.

2. The management system according to claim 1, wherein
the display portion displays a plurality of the measurement value displays, and
each of the measurement value displays is arranged in an individual region.

3. The management system according to claim 1, wherein
the numerical value region has a fan shape in which an outer periphery extends along the meter region, or a circular shape, and
the meter display includes:
an axis display that extends along a circumference of the meter region, and
a needle display that moves along the axis display by a distance corresponding to the measurement value, and
at least a part of the needle display is arranged between the meter region and the numerical value region.

4. The management system according to claim 1, wherein in the measurement value display, a background color of the numerical value region is different from a background color of a region outside the numerical value region.

5. The management system according to claim 1, wherein the display portion further displays an operation state of the power unit together with the measurement value display.

6. The management system according to claim 5, wherein the operation state includes a state in which operation of the power unit is stopped.

7. The management system according to claim 1, wherein the display portion further displays, together with the measurement value display, a control mode indicating whether or not the power unit can be controlled by an external control device arranged outside the power unit.

8. The management system according to claim 1, wherein
the display portion can switch between a plurality of display screens,
each of the display screens is provided with a plurality of switching displays for switching the display screens,
each of the switching displays is individually associated with a different one of the display screens, and
when any one of the switching displays is selected, the display control portion displays, on a display portion, the display screen corresponding to the selected switching display.

9. The management system according to claim 1, wherein
the display portion can switch between a plurality of display screens,
a plurality of the display screens includes a list screen that displays, in a list, the measurement targets for which the measurement value that is abnormal has been detected, and
when the measurement value that is abnormal is detected, the display control portion displays the list screen on the display portion.

10. A power unit comprising: the management system according to any one of claims 1 to 9.

11. A power system comprising:
the power unit according to claim 10; and
an external control device that is arranged outside the power unit and is capable of controlling the power unit.
